# EUROPÄISCHE PATENTSCHRIFT

(11) **EP 2 168 853 B1**
(45) Veröffentlichungstag und Bekanntmachung des Hinweises auf die Patenterteilung: **11.12.2013**
(21) Anmeldenummer: 09012351.4
(22) Anmeldetag: 29.09.2009
(51) Int. Cl.: B62J 7/08

(54) **Aufhängesystem für Taschen oder Behälter an Gepäckträgern**
System for suspending bags or containers on luggage racks
Système de suspension pour sacs ou récipients sur des porte-bagages

(30) Priorität: 29.09.2008 DE 202008012899 U; 29.09.2008 DE 202008012898 U; 07.10.2008 DE 202008013186 U
(43) Veröffentlichungstag der Anmeldung: 31.03.2010
(73) Patentinhaber: Ortlieb, Hartmut, 91560 Heilsbronn (DE)
(72) Erfinder: Ortlieb, Hartmut, 91560 Heilsbronn (DE)
(74) Vertreter: Schuhmann, Albrecht

(56) Entgegenhaltungen:
- EP-A1- 0 477 010
- WO-A1-00/15487
- WO-A1-2006/086948
- WO-A1-2009/050520
- DE-A1- 19 827 973
- DE-C1- 3 933 213
- GB-A- 670 466
- US-B1- 6 293 450

## Beschreibung

Die vorliegende Erfindung betrifft ein Aufllängesystem für Taschen oder Behälter an Gepäckträgern zum Befestigen von insbesondere Packtaschen an Fahrrädern und Arretierung derselben mit den Merkmalen des Oberbegriffs des Anspruchs 1.

EP-A-0 477 010 offenbart ein System mit den Merkmalen des Oberbegriffs des Anspruchs 1.

Packtaschen für Fahrräder und insbesondere zum Anbringen an Gepäckträgern sind in zahlreichen Varianten auf dem Markt. Diese verfügen meist über Haltevorrichtungen, wie z.B. Hacken oder Riemen, welche an den Taschen angenäht oder anders befestigt sind, mittels welcher diese an der oberen Strebe des Gepäckträgers angebracht werden.

Viele Ausführungen mit weichen Taschen hängen damit am Gepäckträger "schlapp" herunter und baumeln unkontrolliert herum und können leicht in die Speichen oder in die Kette gelangen oder in Richtung nach außen an Gegenständen streifen oder gar hängen bleiben.
Packtaschen mit einer besseren Formgebung sind dagegen meistens sehr schwer und werden demzufolge ungern an Fahrrädern montiert, da dadurch eine erhöhte körperlicher Anstrengung bedingt ist.

Als weiterer Nachteil bei bekannten Packtaschen hat sich gezeigt, dass die Fläche des Gepäckträgers meist nicht mehr nutzbar ist, da die seitlichen Pachtaschen, welche mit den Befestigungsmitteln an der oberen Strebe des Gepäckträgers angebracht sind, über die Gepäckträgerfläche hinausragen. Meist werden Packtaschen beim Fahren auch als hinderlich oder unangenehm empfunden da sich mit diesen, insbesondere wenn sie falsch beladen werden ein etwas schwammigeres Fahrverhalten einstellt was viele Radfahrer verunsichert. Dieses Verhalten steigert sich bei zunehmender Beladung der Packtaschen, insbesondere wenn das Gewicht in den oberen Bereich der Taschen gelangt und so den Schwerpunkt des Fahrrades nach oben verschiebt.

Aufgabe der vorliegenden Erfindung ist es daher, ein Aufhängesystem oder Befestigungssystem für Taschen oder Behälter an Gepäckträgern zum Befestigen von insbesondere Packtaschen an Fahrrädern und Arretierung derselben zu schaffen welches die genannten Nachteile vermindert und verbesserte Handlingeigenschaften aufweist.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Aufhängesystem für Taschen oder Behälter an Gepäckträgern zum Befestigen von insbesondere Packtaschen an Fahrrädern und Arretierung derselben, wobei das Aufhängesystem aus mindestens zwei, an einem Träger oder einem Fahrradrahmen anbringbaren Haltelementen mit Befestigungsstellen für Taschen oder Behälter besteht und wenigstens zwei der Haltelemente mit einem Mittel, Abstand definierend, verbunden sind.

Erfindungsgemäß ist weiter, dass die Haltelemente als längliche Streben mit einer Aufnahmevorrichtung zum Anbringen an einen Gepäckträger oder an ein Fahrradelement ausgeführt sind und von der Oberseite des Gepäckträgers aus gesehen nach unten ausgeführt sind. An diese Haltelemente, welche über z.B. eine Stange oder eine Strebe, in einem vorgegebenen Abstand zueinander fest verbunden sind, sind Befestigungsstellen für eine Tasche oder einen Behälter angebracht.
Durch diese Strebe, bestehend aus der Verbindungsstange, den Haltelementen mit den Befestigungsstellen für die Tasche und den Aufnahmevorrichtungen, mittels welche dieses System an der Strebe an der Oberseite des Gepäckträgers aufgehängt wird, erhält man eine im Wesentlichen nach unten Versetzte Strebe der Gepäckträgerstrebe mit im Abstand festgelegten Befestigungsstellen für Taschen oder Behälter.
Die Aufnahmevorrichtung, mittels welcher die Haltelemente an der Gepäckträgerstrebe festgemacht werden, sind bis zu einer evtl. festen Fixierung in Längsrichtung verschiebbar, wie auch auf der Stange verdrehbar, womit die untere Strebe mit den Befestigungspunkten für die Aufnahme der Tasche im Winkel zum Fahrrad verstellt werden kann.
Mit dieser im Wesentlichen parallel zur oberen Gepäckträgerstrebe nach unten versetzten zusätzlichen Strebe mit angeordneten Befestigungsstellen für Taschen oder Behälter löst man erfindungsgemäß das Problem der fehlenden Fläche auf dem Gepäckträger, da nun an dieser nach unten versetzten Strebe angebrachte Packtaschen nicht mehr, bzw. nicht mehr so weit nach oben über den Gepäckträger hinausragen. Auch die Stabilität des Fahrrades mit beladenen Packtaschen wird dadurch wesentlich verbessert, das der Schwerpunkt tiefer liegt. Übliche Packtaschen lassen sich auch an diese versetzte, einfach an die Oberstrebe des Gepäckträgers anzubringende Strebe anbringen.

Nach einer bevorzugten Ausführung eines Aufhängesystems für Taschen oder Behälter verfügt die Erfindung neben den genannten beiden oberen Aufhängepunkten über einen dritten Punkt an welchen mittels eines anpassbaren Haltelements eine weitere Befestigungsstelle angeordnet wird. Die entsprechenden Taschen oder Behälter verfügen analog über übereinstimmende Dreipunktbefestigungsvorrichtungen, bzw. Aufnahmevorrichtungen.

Mittels des Dritten Angriffspunktes, welcher im Bereich des unteren Teils des Gepäckträgers oder im Bereich der Hinterachse des Fahrrads angeordnet ist, wird die Pachtasche in diesem Bereich sehr gut gestützt und insbesondere gegen seitliches heraus schwingen oder gegen zu starkes schlagen gegen den Gepäckträger oder in das Rad abgestützt.
Das zwischen den beiden Haltelementen vorzusehende, Abstand definierende Mittel kann als Rohr, Strebe, Leiste oder Platte ausgeführt werden und der Gesamtoptik angepasst sein, wobei die beiden Haltelemente auf diesem entsprechend der Aufnahmen in der vorgesehenen Tasche fest fixiert werden.

Die Aufhängevorrichtung ist erfindungsgemäß als Dreipunktaufhängung für entsprechend ausgeführte Taschen oder Behälter ausgeführt, wobei von der unteren Befestigungsstelle jeweils eine Strebe zu einer der oberen Befestigungsstellen angeordnet ist, welche die Tasche abstützen oder formgebend unterstützen. Die Streben sind dabei bevorzugt als nicht biegesteife Elemente, wie Seile oder Drähte ausgeführt und spannen ein Dreieck zwischen den drei Befestigungspunkten auf, über welches die Tasche aufgehängt wird.
Die bevorzugt verwendete Pachtasche weist im Wesentlichen bündig ausgeführte Verbindungs-Befestigungselemente auf mittels welchen die Tasche in die Befestigungsstellen eingeführt und Verriegelt wird. . Erfindungsgemäß sieht die Befestigung vor indem die Tasche mit ihrer unteren Verbindungs-Befestigungsstelle in die untere Befestigungsstelle des Aufhängesystems eingeführt wird, danach wird die Tasche gegen den Gepäckträger gedrückt und durch seitliches Verdrehen in die oberen Befestigungsstellen des Aufhängesystems eingeführt und verriegelt. Die Ausführungen der Taschen oder Behälter können entsprechend variieren

Die bündigen Verbindungs-Befestigungsstellen an den zu verwendenden Taschen oder Behälter sind bevorzugt wasserdicht auf die Taschen aufgeschweißt oder in diese eingeschweißt, wobei eine zusätzlich Versteifung im Inneren des oberen Bereichs der Tasche vorgesehen ist. Die Verbindungs-Befestigunsstelle der Tasche ist dabei bevorzugt zusätzlich mechanisch mit der Versteifung durch Schrauben oder Nieten verbunden.

Im Folgenden wird die Erfindung anhand von Zeichnungen beispielhaft näher beschrieben, dabei zeigen:
- Fig.1: eine perspektivische Darstellung eines Aufhängesystems an einem Gepäckträger
- Fig. 2: eine Darstellung einer Tasche von hinten
- Fig. 3: eine perspektivische Darstellung einer Tasche im Schnitt

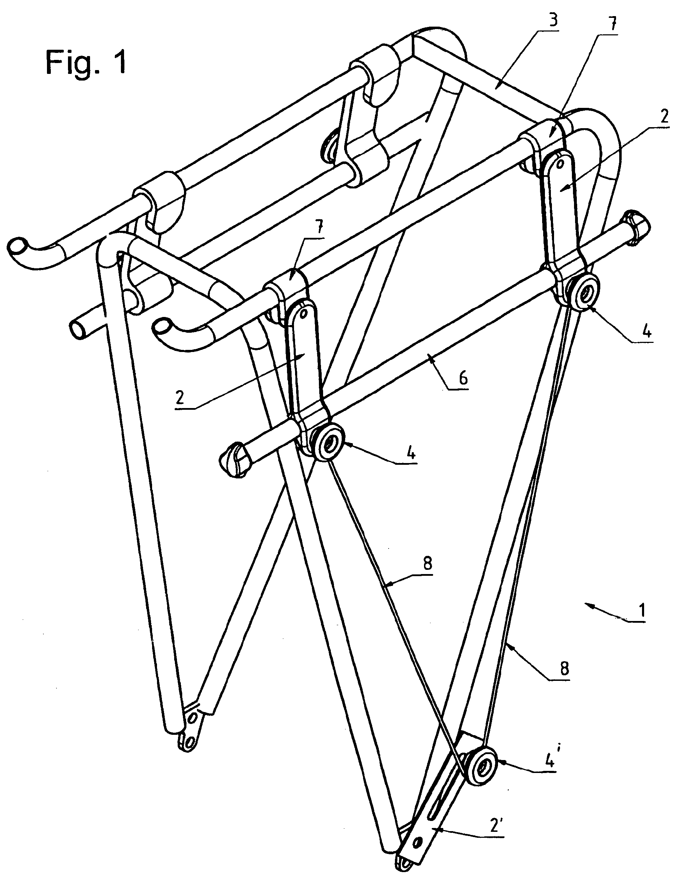

Fig. 1 zeigt einen Gepäckträger 3 eines Fahrrads, an welchem Haltelemente 2 mit daran angebrachten Befestigungsstellen 4 für Aufnahme-Befestigungsstellen 9 in Taschen vorgesehen sind. Die Haltelemente 2 werden mittels Aufnahmevorrichtungen 7 on der Oberstrebe des Gepäckträgers 3 eingehängt. Diese kann in Längsrichtung verschoben werden, auf der Strebe gedreht werden und in der erforderlichen Position fixiert werden, womit auch der Winkel der angebrachten Packtasche einstellbar ist.

An der Unterseite sieht man die Befestigungsstelle 4' an der Halterung 2' in welche die untere Verbindungs-Befestigunsgstelle einer Tasche eingeführt werden kann. Die hier gezeigte Ausführung ist mit gespannten Drahtseilen 8 zwischen der unteren Befestigungsstelle und jeweils einer oberen Befestigungsstelle ausgeführt über welche die angehängte Tasche gestützt wird.

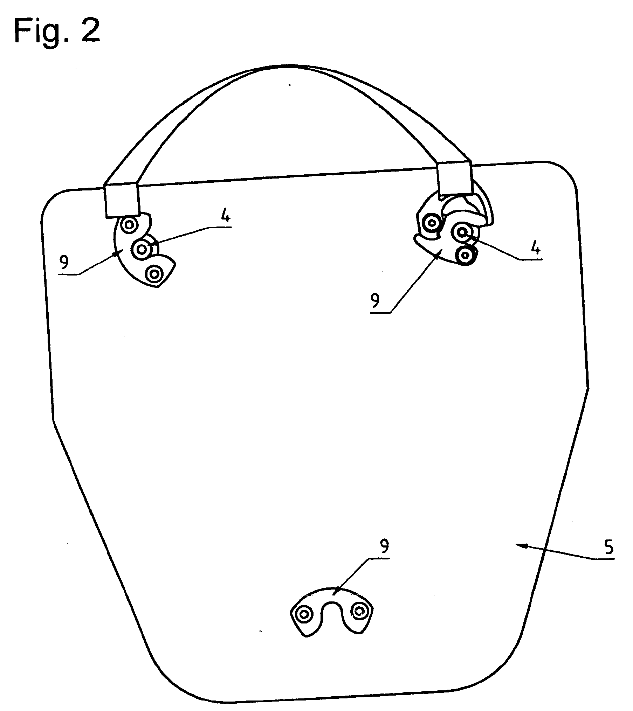

In Fig.2 ist eine Ausfertigung dargestellt in welcher eine Packtasche 5 mit drei Befestigungsstellen 9 ausgeführt ist, angeordnet in Dreiecksform. Von den beiden oberen Befestigungsstellen 9 ist die rechte mit einer Verriegelung ausgeführt, welche über den Haltegriff der Tasche ein als Bedienteil betätigt werden kann. Mit Zug am Griffband würde der Riegel zurückgleiten und das Befestigungsteil 9, bzw. die Tasche könnte aus dem Pinn 4 nach links heraus bewegt werden.

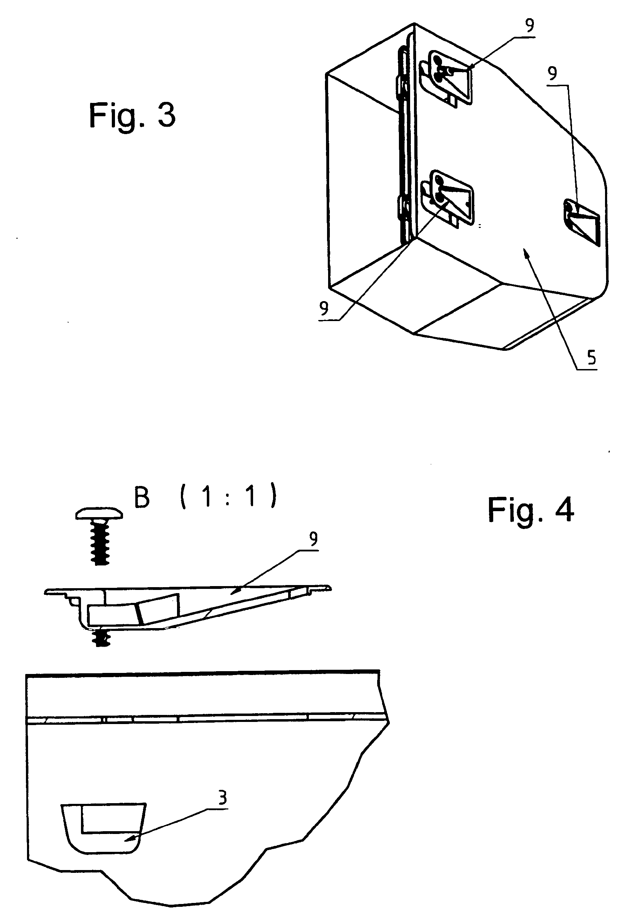

In Fig. 3 ist anschaulich dargestellt wie die rückseitig bündig ausgeführte Tasche mit den Verbindungs-Befestigungselementen 9 ausgeführt ist.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgerührt werden können, ohne dass vom Umfang der Erfindung, wie er in den beiliegenden Ansprüchen definiert ist abgewichen wird.

## Patentansprüche

1. Aufhängesystem für Taschen oder Behälter an Gepäckträgern zum Befestigen von insbesondere Packtaschen an Fahrrädern und Arretierung derselben,
**dadurch gekennzeichnet,**
**dass** das Aufhängesystem (1) aus mindestens zwei oberen, an einem Träger (3) oder einem Fahrradrahmen anbringbaren Haltelementen (2) mit Befestigungsstellen (4) für Taschen (5) oder Behälter besteht und wenigstens zwei der Haltelemente (2) mit einem Mittel (6), Abstand definierend, verbunden sind, wobei die Tasche (5) oder der Behälter mit einem unteren Befestigungs-Verbindungselement in eine untere Befestigungsstelle (4') des Aufhängesystems einführbar ist und die Fixierung durch seitliches Einschieben zweier oberen Verbindungs-Befestigungsstellen der Tasche in die oberen Befestigungsstellen (4) des Aufhängesystems (1) erfolgt.

2. Aufhängesystem für Taschen oder Behälter nach Anspruch 1,
**dadurch gekennzeichnet,**
**dass** die Halteelemente (2) als längliche Streben mit wenigstens einer Aufnahmevorrichtung (7) zum Anbringen an einen Gepäckträger (3) oder ein Fahrradelement ausgeführt sind, welche die oberen Befestigungsstellen für eine Tasche oder einen Behälter unter die Oberkante des Gepäckträgers (3) anordnen.

3. Aufhängesystem für Taschen oder Behälter nach Anspruch 1,
**dadurch gekennzeichnet,**
**dass** die Haltelemente (2) an ihren Aufnahmevorrichtungen (7) am Gepäckträger (3) schieb- und drehbar sowie fixierbar ausgeführt sind.

4. Aufhängesystem für Taschen oder Behälter nach Anspruch 1,
**dadurch gekennzeichnet,**
**dass** das Aufgängesystem (1) aus drei Haltelementen (2) mit Befestigungsstellen (4) besteht, von welchen zwei obere mit einem Abstand definierenden Mittel (6) parallel unter der Gepäckträgerauflage angeordnet sind und der Dritte (2') im unteren Bereich des Gepäckträgers (3) oder im Bereich der Hinterradachse des Fahrrads angeordnet ist.

5. Aufhängesystem für Taschen oder Behälter nach Anspruch 4,
**dadurch gekennzeichnet,**
**dass** das dritte, längenvariable Haltelement (2') mit der Befestigungsstelle (4') als Abstandhalter des unteren Bereichs der angebrachten Tasche (5) oder des Behälters gegen den Fahrradrahmen und/oder des Rades ausgeführt ist.

6. Aufhängesystem für Taschen oder Behälter nach Anspruch 4,
**dadurch gekennzeichnet,**
**dass** das dritte Haltelement (2') mit der Befestigungsstelle (4') als Halteeinrichtung gegen nach außen schwenken des unteren Bereichs der angebrachten Tasche (5) oder des Behälters ausgeführt ist.

7. Aufhängesystem für Taschen oder Behälter nach Anspruch 1,
**dadurch gekennzeichnet,**
**dass** die Befestigungsstellen (4) an den Haltelementen (2) und der Abstand zwischen den Befestigungsstellen (4) für übliche Packtaschen passend ausgeführt ist.

8. Aufhängesystem für Taschen oder Behälter nach Anspruch 1,
**dadurch gekennzeichnet,**
**dass** das Abstand definierende Mittel (6) zwischen den beiden Befestigungsstellen (4) an den Haltemitteln (2) als Rohr (6) ausgeführt ist an welchem die beiden Halteelemente (2) form- oder kraftschlüssig angebracht sind.

9. Aufhängesystem für Taschen oder Behälter nach Anspruch 1,
**dadurch gekennzeichnet,**
**dass** die Tasche (5) oder der Behälter mit einer Dreipunktaufhängung an dem System anbringbar ist.

10. Aufhängesystem für Taschen oder Behälter nach Anspruch 1,
**dadurch gekennzeichnet,**
**dass** zwischen den beiden oberen, an den Haltelementen (2) angebrachten Befestigungsstellen (4) und der unteren Befestigungsstelle (4') ein Dreieck mittels dazwischen angebrachten Streben (8) angeordnet ist, welches die Arretierpunkte (4, 4, 4') einer Tasche (5) oder eines Behälters mit Dreipunktbefestigung definieren.

11. Aufhängesystern für Taschen oder Behälter nach Anspruch 10,
**dadurch gekennzeichnet,**
**dass** die Streben (8) zwischen den oberen Haltelementen (2) und dem unteren Halteelement (2') nicht biegesteif ausgeführt sind.

12. Aufhängesystem für Taschen oder Behälter nach Anspruch 10,
**dadurch gekennzeichnet,**
**dass** die Streben (8) Seile, Schnüre, Seile oder Drahtseile sind.

13. Aufhängesystem für Taschen oder Behälter nach Anspruch 1,
**dadurch gekennzeichnet,**
**dass** die Befestigungsstellen (4, 4') an den Halteelementen (2, 2') zur Aufnahme von Taschen (5) mit im Wesentlichen bündig angeordneten Verbindungs-Befestigungselementen (9) ausgeführt sind.

14. Aufhängesystem für Taschen oder Behälter nach Anspruch 13,
**dadurch gekennzeichnet,**
**dass** die Verbindungs-Befestigungselemente (9) der Taschen wasserdicht ausgeführt sind.

15. Aufhängesystem für Taschen oder Behälter nach Anspruch 13,
**dadurch gekennzeichnet,**
**dass** die Verbindungs-Befestigungselemente (9) der Taschen angeschweißt sind.

16. Aufhängesystem für Taschen oder Behälter nach Anspruch 13,
**dadurch gekennzeichnet,**
**dass** die Verbindungs-Befestigungselemente (9) der Taschen angeschraubt oder angenietet sind.

## Claims

1. A suspension system for bags or containers on bicycle racks for securing in particular panniers to bicycles and locking the latter in place,
**characterized in that**
the suspension system (1) consists of at least two upper retaining elements (2) that can be fastened to a carrier (3) or bicycle frame and have fastening sites (4) for bags (5) or containers, and that at least two of the retaining elements (2) are joined with a means (6) so as to define a distance, wherein the bag (5) or container can be introduced into a lower fastening site (4') of the suspension system with a lower fastening and joining element, and fixation takes place by laterally inserting two upper joining and fastening sites of the bag into the upper fastening sites (4) of the suspension system (1).

2. The suspension system for bags or containers according to claim 1,
**characterized in that**
the retaining elements (2) are designed as oblong braces with at least one receiving device (7) for attachment to a bicycle rack (3) or a bicycle element, which arrange the upper fastening sites for a bag or container under the upper edge of the bicycle rack (3).

3. The suspension system for bags or containers according to claim 1,
**characterized in that**
the receiving devices (7) of the retaining elements (2) are designed so as to be shifted, rotated and fixed in place on the bicycle rack (3).

4. The suspension system for bags or containers according to claim 1,
**characterized in that**
the suspension system (1) consists of three retaining elements (2) with fastening sites (4), of which two upper ones are arranged parallel under the bicycle rack support with a space-defining means (6), and the third one (2') is arranged in the lower region of the bicycle rack (3) or in the area of the rear axle of the bicycle.

5. The suspension system for bags or containers according to claim 4,
**characterized in that**
the third, variable-length retaining element (2') with the fastening site (4') is designed as a spacer for the lower region of the secured bag (5) or container relative to the bicycle frame and/or the wheel.

6. The suspension system for bags or containers according to claim 4,
**characterized in that**
the third retaining element (2') with the fastening site (4') is designed as a retaining device to prevent the lower region of the secured bag (5) or container from outwardly swiveling.

7. The suspension system for bags or containers according to claim 1,
**characterized in that**
the fastening sites (4) on the retaining elements (2) and the distance between the fastening sites (4) are suitably designed for conventional panniers.

8. The suspension system for bags or containers according to claim 1,
**characterized in that**
the distance-defining means (6) between the two fastening sites (4) on the retaining means (2) is designed as a pipe (6), to which the two retaining elements (2) are positively or non-positively secured.

9. The suspension system for bags or containers according to claim 1,
**characterized in that**
the bag (5) or container can be attached to the system with a three-point suspension.

10. The suspension system for bags or containers according to claim 1,
**characterized in that**
a triangle is situated between the two upper fastening sites (4) secured to the retaining elements (2) and the lower fastening site (4') by means of interspersed braces (8), and defines the locking points (4, 4, 4') of a bag (5) or a container with three-point fastening.

11. The suspension system for bags or containers according to claim 10,
**characterized in that**
the braces (8) between the upper retaining elements (2) and the lower retaining element (2') are not flexurally rigid in design.

12. The suspension system for bags or containers according to claim 10,
**characterized in that**
the braces (8) are ropes, cords, ropes or cables.

13. The suspension system for bags or containers according to claim 1,
**characterized in that**
the fastening sites (4, 4') on the retaining elements (2, 2') are designed for accommodating bags (5) with joining and fastening elements (9) arranged in essentially a flush manner.

14. The suspension system for bags or containers according to claim 13,
**characterized in that**
the joining and fastening elements (9) of the bags are watertight in design.

15. The suspension system for bags or containers according to claim 13,
**characterized in that**
the joining and fastening elements (9) of the bags are welded on.

16. The suspension system for bags or containers according to claim 13,
**characterized in that**
the joining and fastening elements (9) of the bags are screwed or riveted on.

## Revendications

1. Système d'accrochage pour des sacs ou des contenants sur des porte-bagages, destiné à fixer notamment des sacs d'emballage sur des bicyclettes et à bloquer ces derniers, **caractérisé en ce que** le système d'accrochage (1) est constitué d'au moins deux éléments de maintien (2) supérieurs, susceptibles d'être montés sur un support (3) ou sur un cadre de bicyclette avec des zones de fixation (4) pour des sacs (5) ou des contenants et **en ce qu'**au moins deux éléments de maintien (2) sont reliés avec un moyen (6) en définissant un écart, le sac (5) ou le contenant pouvant être introduit par un élément de fixation et de liaison inférieur dans une zone de fixation (4') inférieure du système d'accrochage et la fixation s'effectuant par insertion latérale de deux zones de fixation et de liaison supérieures du sac dans les zones de fixation (4) supérieures du système d'accrochage (1).

2. Système d'accrochage pour des sacs ou des contenants selon la revendication 1, **caractérisé en ce que** les éléments de maintien (2) sont réalisés en tant qu'entretoises allongées avec au moins un dispositif de logement (7) destiné à être monté sur un porte-bagages (3) ou un élément de bicyclette, qui placent les zones de fixation supérieures pour un sac ou pour un contenant sous l'arête supérieure du porte-bagages (3).

3. Système d'accrochage pour des sacs ou des contenants selon la revendication 1, **caractérisé en ce que** sur leurs dispositifs de logement (7) sur le porte-bagages (3), les éléments de maintien (2) sont réalisés en étant déplaçables et rotatifs, ainsi que susceptibles d'être fixés.

4. Système d'accrochage pour des sacs ou des contenants selon la revendication 1, **caractérisé en ce que** le système d'accrochage (1) est constitué de trois éléments de maintien (2) avec des zones de fixation (4), dont deux supérieurs sont placés avec un moyen (6) définissant un écart à la parallèle sous l'appui de porte-bagages et le troisième (2') est placé dans la zone inférieure du porte-bagages (3) ou dans la zone de l'essieu de roue arrière de la bicyclette.

5. Système d'accrochage pour des sacs ou des contenants selon la revendication 4, **caractérisé en ce que** le troisième élément de maintien (2') à longueur variable est réalisé avec la zone de fixation (4') en tant qu'écarteur de la zone inférieure du sac (5) monté ou du contenant contre le cadre de bicyclette et/ou la roue.

6. Système d'accrochage pour des sacs ou des contenants selon la revendication 4, **caractérisé en ce que** le troisième élément de maintien (2') est réalisé avec la zone de fixation (4') en tant que système de maintien contre un pivotement vers l'extérieur de la zone inférieure du sac monté (5) ou du contenant.

7. Système d'accrochage pour des sacs ou des contenants selon la revendication 1, **caractérisé en ce que** les zones de fixation (4) sur les éléments de maintien (2) et l'écart entre les zones de fixation (4) sont réalisés pour être adaptés à des sacs d'emballage usuels.

8. Système d'accrochage pour des sacs ou des contenants selon la revendication 1, **caractérisé en ce que** le moyen (6) définissant l'écart entre les deux zones de fixation (4) sur les moyens de maintien (2) est réalisé en tant que tube (6) sur lequel les deux éléments de maintien (2) sont montés par complémentarité de forme ou de force.

9. Système d'accrochage pour des sacs ou des contenants selon la revendication 1, **caractérisé en ce que** le sac (5) ou le contenant peuvent se monter sur le système par un accrochage à trois points.

10. Système d'accrochage pour des sacs ou des contenants selon la revendication 1, **caractérisé en ce qu'**entre les deux zones de fixation (4) supérieures montées sur les éléments de maintien (2) et la zone de fixation (4') inférieure, est placé au moyen d'entretoises (8) montées entre celles-ci un triangle qui définit les points de blocage (4, 4, 4') d'un sac (5) ou d'un contenant par fixation à trois points.

11. Système d'accrochage pour des sacs ou des contenants selon la revendication 10, **caractérisé en ce qu'**entre les éléments de maintien (2) supérieurs et l'élément de maintien (2') inférieur, les entretoises (8) ne sont pas réalisées en étant résistantes à la flexion.

12. Système d'accrochage pour des sacs ou des contenants selon la revendication 10, **caractérisé en ce que** les entretoises (8) sont des cordes, des ficelles, des câbles ou des câbles métalliques.

13. Système d'accrochage pour des sacs ou des contenants selon la revendication 1, **caractérisé en ce que** pour recevoir des sacs (5), les zones de fixation (4, 4') sur les éléments de maintien (2, 2') sont réalisées avec des éléments de liaison et de fixation (9) placés sensiblement à fleur.

14. Système d'accrochage pour des sacs ou des contenants selon la revendication 13, **caractérisé en ce que** les éléments de liaison et de fixation (9) des sacs sont réalisés en étant étanches à l'eau.

15. Système d'accrochage pour des sacs ou des contenants selon la revendication 13, **caractérisé en ce que** les éléments de liaison et de fixation (9) des sacs sont montés par soudage.

16. Système d'accrochage pour des sacs ou des contenants selon la revendication 13, **caractérisé en ce que** les éléments de liaison et de fixation (9) des sacs sont montés par vissage ou par rivetage.
